Europäisches Patentamt

European Patent Office

Office européen des brevets

(19)

(11) **EP 1 624 413 A2**

(12) **EUROPEAN PATENT APPLICATION**

(43) Date of publication:
   **08.02.2006 Bulletin 2006/06**

(51) Int Cl.:
   *G06T 7/00* (2006.01)   *G06T 11/00* (2006.01)

(21) Application number: **05107158.7**

(22) Date of filing: **03.08.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **06.08.2004 US 912923**<br><br>(71) Applicant: **Microsoft Corporation**<br>**Redmond WA 98052 (US)**<br><br>(72) Inventors:<br>• **Tang, Chi Keung**<br>**98052, Redmond (US)** | • **Shum, Heung-Yeung**<br>**98052, Redmond (US)**<br>• **Sun, Jian**<br>**98052, Redmond (US)**<br>• **Li, Yin**<br>**98052, Redmond (US)**<br><br>(74) Representative: **Grünecker, Kinkeldey,**<br>**Stockmair & Schwanhäusser**<br>**Anwaltssozietät**<br>**Maximilianstrasse 58**<br>**80538 München (DE)** |

(54) **Systems and methods for image data separation**

(57)   A method includes receiving a first set of one or more data nodes specified by a user using a first specification mode, receiving a second set of one or more data nodes specified by a user using a second specification mode, and automatically identifying a data node to be separated from a collection of data nodes based on a similarity measure characterizing similarity between the data node to be separated and the one or more data nodes in the first set and the one or more data nodes in the second set. A system includes an image processing module automatically segmenting a determined region from an image based on a similarity measure characterizing similarity between pixels in the determined region and a set of one or more specified seed pixels associated with pixels to be included in the determined region.

*Fig. 1*

**EP 1 624 413 A2**

**Description**

<u>RELATED APPLICATIONS</u>

This patent application is related to co-owned U.S. Patent Application Serial No. 10/861,771 filed June 3, 2004, entitled "Foreground Extraction Using Iterated Graph Cuts," which is incorporated herein by reference for all that is discloses.

<u>TECHNICAL FIELD</u>

The described subject matter relates to data processing, and more particularly to systems and methods for data separation.

<u>BACKGROUND</u>

In the field of image processing, users often need to separate certain portions of an image from the whole image. The user typically has a visual sense of what portions need to be separated, but conveying that information to a computer-based image processing tool can be quite challenging. The process of separating particular image data from the image can be very time consuming and tedious, especially when the image or the portions to be separated are complex.

"Image cutout" is a technique of extract an object in an image from its background. The cutout can be composited on a different background to create a new scene. With the advent of digital imaging, it has become possible to specify the foreground and background on an individual pixel level. The task in image cutout involves specifying which parts of the image are "foreground" (the part the user wants to cut out) and which are the background. In some traditional approaches, the user must specify each pixel of foreground individually. The tediousness of this pixel-accurate work can make image cutout a particularly frustrating task for users.

Two other approaches have evolved: boundary-based and region-based. Each of these methods takes features of the image that the computer can detect and uses them to help automate or guide the foreground specification process. Boundary-based methods cut out the foreground by allowing the user to surround the foreground with an evolving curve. The user traces along the foreground boundary and the system optimizes the curve in a piecewise manner. Examples of the boundary-based approach include intelligent scissor, image snapping and Jetstream.

While the boundary-based approach is easier than individual pixel selection, boundary-based techniques still demand a large amount of attention from the user. For example, there is almost never a perfect match between the features used by the algorithms and the foreground image. As a result, the user must control the curve carefully. If a mistake is made, the user must "back up" the curve and try again. The user is also required to enclose the entire boundary, which can take some time for a complex, high-resolution object. The close control required interferes with the user's ability to get an overview of their progress. It is difficult to zoom in and out of the image while dragging the pixel-accurate boundary line. Finally, once the boundary is specified, most tools are no longer helpful. Any errors must be cleaned up at the end using traditional selection tools.

Traditional region-based approaches do not require a pixel-accurate boundary line, but also tend to be inaccurate. Traditional region-based methods allow the user to select pixels that have a common feature (such as RGB color) of pixels to be included in the foreground or background. An underlying algorithm then extrapolates to surrounding pixels that have the feature in common with the selected pixels to within a user-specified tolerance. One problem with region-based techniques is that there are often cases where the features used by the region detection algorithms do not match up with the desired foreground or background elements. Often, there is no specific feature that will discriminate foreground from background without user assistance, such as the case of removing a single individual from a group photograph.

In traditional region-based approaches, even when some feature distinction exists, it is often necessary to constantly adjust tolerances in ambiguous areas, such as shadow and low-contrast edges. Such constant adjustment to tolerances can be extremely tedious. In practice, the user must employ a combination of traditional boundary tools, region tools, and hand-selection to produce a satisfactory result.

Therefore, there is a need for a system enabling a user to specify data to be separated that does not require the user to specify every unit of the data, without sacrificing accuracy.

<u>SUMMARY</u>

Implementations described herein provide for automatically identifying a region of an image to be separated based on a similarity measure corresponding to pixels in the region. A system includes an image processing module automatically segmenting a determined region from an image based on a similarity measure characterizing similarity between pixels in the determined region and a set of one or more specified seed pixels associated with pixels to be included in the determined region.

## BRIEF DESCRIPTION OF THE DRAWINGS

Fig. 1 illustrates an exemplary sequence of steps in a process for data separation involving separating a foreground region from a background region in a digital image;

Fig. 2 illustrates exemplary enlarged views of portions of the digital image in the marking step and the polygon editing step;

Fig. 3 illustrates an exemplary image data separation scheme in which foreground seeds and background seeds are specified and a segmentation boundary is positioned based on a similarity analysis;

Fig. 4 illustrates an exemplary image data separation scheme in which groups of pixels are pre-segmented into regions that are used in the similarity analysis;

Fig. 5 illustrates an exemplary editable polygon between specified foreground seeds and background seeds;

Fig. 6 illustrates an exemplary screenshot of a user interface through which a foreground region and a background region can be specified in an image;

Fig. 7 illustrates another exemplary screenshot of the user interface through which a polygon around the specified foreground region can be edited;

Fig. 8 illustrates another exemplary screenshot of the user interface through which the specified foreground region can be extracted from the image;

Fig. 9 is a flow chart having exemplary operations for performing data separation based on similarity measures;

Fig. 10 illustrates a general purpose computer that can be programmed to perform data separation operations described herein.

## DETAILED DESCRIPTION

### Exemplary System

An exemplary system includes a data separation module separating one of more data units, called data nodes, from a collection of data nodes. In the implementations described herein, data nodes refer to pixels in a digital image. For illustrations purposes, implementations shown and described here involve separation of pixels in a foreground region of a digital image from a background region in the image.

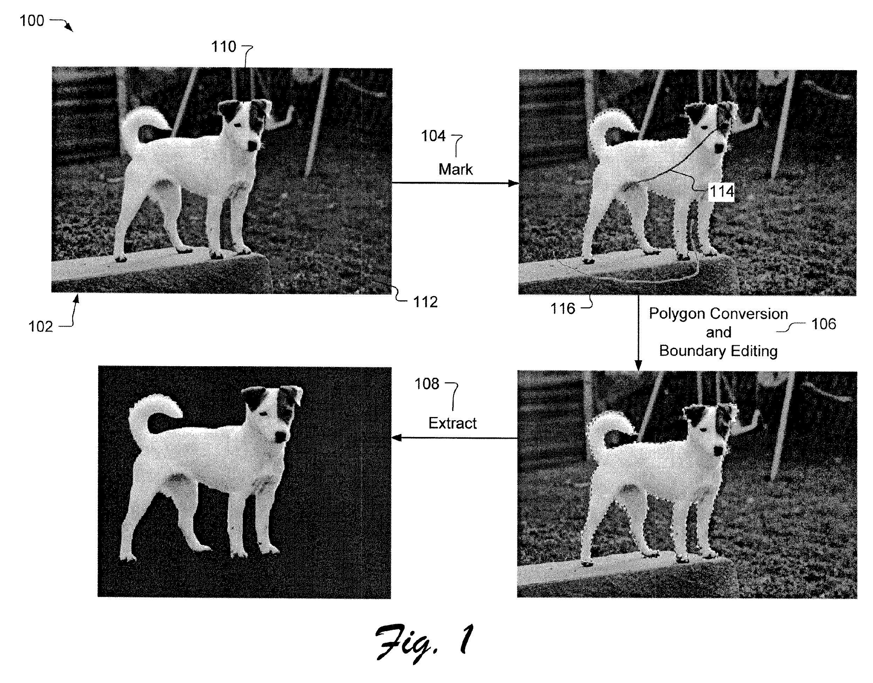

Fig. 1 illustrates an exemplary three-step process 100 of separating foreground region from a background region in a digital image 102. The steps include a marking step 104, a polygon conversion/boundary editing step 106, and an extraction step 108. Generally, the process 100 is a coarse-to-fine process in which general regions are initially coarsely specified, followed by finely delimiting the regions. To illustrate the exemplary process 100, the foreground region 110 includes a dog, which is to be separated from the background region 112.

In the marking step 102, the foreground region 110 and the background region 112 are specified by the user. The user marks any number of pixels in the foreground region 110 using a foreground specification mode. Similarly, the user marks any number of pixels in the background region 112 using a background specification mode.

In a particular implementation, the foreground specification mode includes user activation of a control on an input device, such as the left button on a mouse while pointing to pixels in the foreground; the background specification mode involves user activation of a different control on the input device, such as the right button on the mouse while pointing to pixels in the background. In this implementation, the foreground region 110 is marked with a foreground indicator 114 in a first color (e.g., yellow line), and the background region 112 is marked with a background indicator 116 in another color (e.g., blue line). The marking step 102 is described in further detail below with respect to an exemplary user interface.

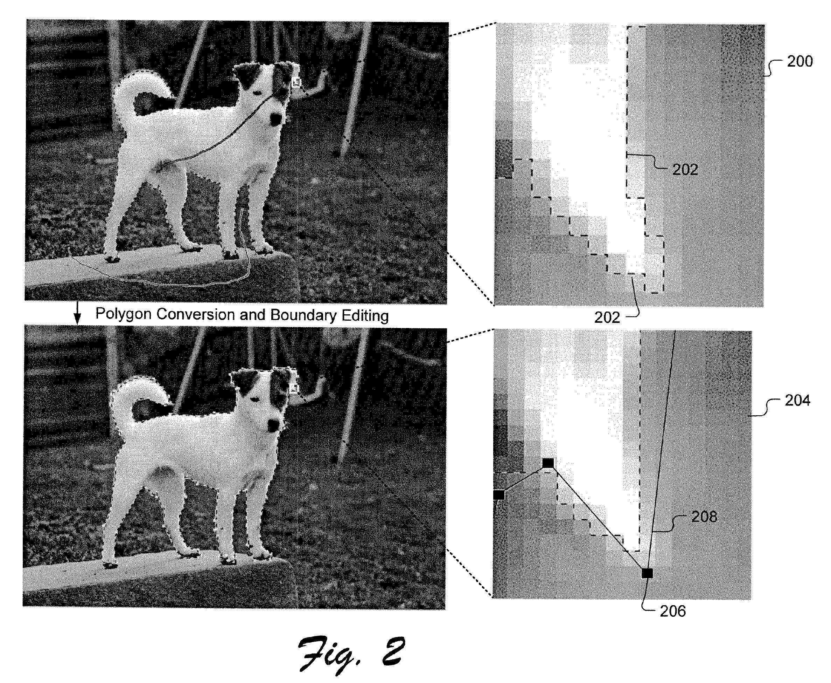

After the foreground region 110 and the background region 112 are specified, the foreground region 110 is automatically enclosed with a boundary marker. Fig. 2 shows a more detailed view of an exemplary boundary marker 200 in enlarged image 202. As shown, the exemplary boundary marker 200 is made up of "marching ants"; i.e., moving black and white dashes.

The polygon conversion and editing step 104 automatically converts the foreground region 110 into a polygon including a plurality of vertices and lines, and enables the user the edit the polygon. In one implementation, the user can edit the boundary by clicking and dragging on polygon vertices to adjust the boundary marker 200. In another implementation, the user can employ a polygon brush, described further below, for easily adjusting a polygon line or lines. Fig. 2 illustrates another enlarged image 204 that contains a polygon vertex 206 at the intersection of polygon lines 208.

After polygon conversion and boundary editing 104, the foreground region 110 is separated from the background region 112 in the extracting step 106. The extracted foreground region 110 can be inserted into another image having a different background.

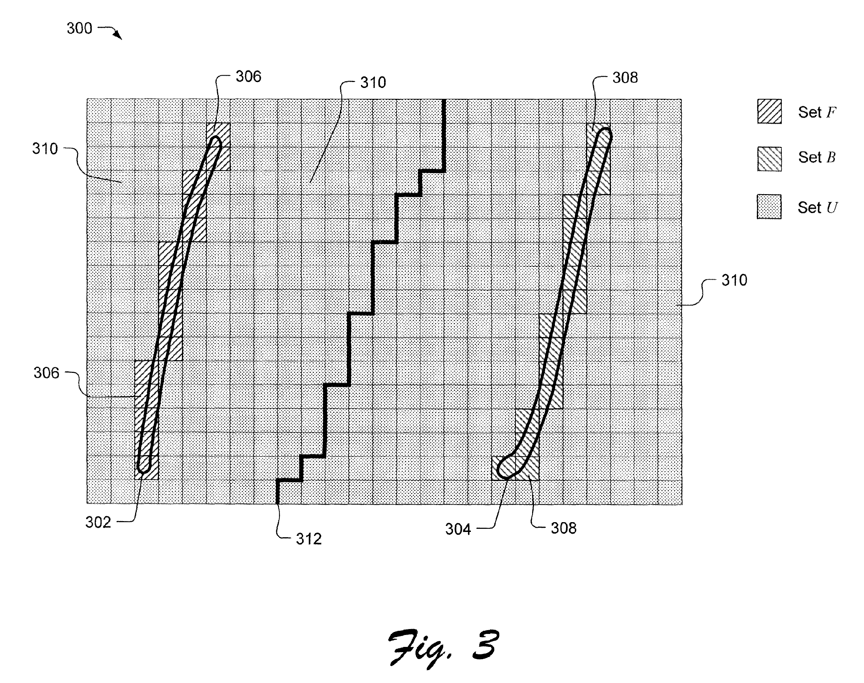

Fig. 3 illustrates an exemplary graph 300 of nodes that includes nodes to be separated from other nodes in a digital image. In this implementation, the nodes are pixels. The graph 300 is used to illustrate a graph cut scheme that facilitates marking and separating regions in the image. A foreground marker 302 and a background marker 304 are positioned on the graph 300 to specify a foreground region and a background region, respectively.

After the user marks the image, pixels intersected by the marks are assigned to either a set $F$ or a set $B$, depending on which mark they intersect. Set $F$ includes pixels intersected by the foreground marker 302, which are called foreground seeds 306. Set $B$ includes pixels intersected by the background marker 304, which are called background seeds 308. A third set, $U$, of uncertain nodes 310 is defined to include pixels that are not marked.

Unmarked pixels are assigned to either a foreground region or a background region based on similarity with the pixels in sets $F$ and $B$. After similarity is determined, a segmentation boundary 312 is rendered between the pixels in the foreground and pixels in the background.

In a particular implementation, similarity is measured using an energy function. A graph cut algorithm minimizes the energy function in order to locate a segmentation boundary. The graph 300 may be characterized by the statement $G = \langle N,A \rangle$, where $N$ is the set of all nodes and $A$ is the set of all arcs connecting adjacent nodes. The arcs are adjacency relationships with multiple (e.g., four or eight) connections between neighboring pixels. Each node is assigned a unique label $x_i$, for $i \in N$, wherein $x_i \in$ {foreground(= 1), background(= 0)}. The solution, $X = \{x_i\}$, can be obtained by minimizing a Gibbs energy $E(X)$ function:

$$E(X) = \sum_{i \in N} E_1(x_i) + \lambda \sum_{(i,j) \in A} E_2(x_i, x_j) \qquad (1)$$

where $E_1(x_i)$ is referred to as the likelihood energy, $E_2(x_i, x_j)$ is referred to as the prior energy, and $\lambda$ is a parameter to balance the influence of two terms.

$E_1(x_i)$ represents a cost associated with node $i$ with label $x_i$. $E_2(x_i, x_j)$ represents a cost when the labels of adjacent nodes $i$ and $j$ are $x_i$ and $x_j$, respectively. The energy terms, $E_1$ and $E_2$, are determined based on user input. Those skilled in the art will readily recognize how to minimize E(X) in equation (1). One exemplary technique for minimizing $E(X)$ is the max-flow algorithm.

In equation (1), $E_1$ encodes the color similarity of a node, and is used to assign a node to the foreground or background. To compute $E_1$, the colors in sets $F$ and $B$ are first clustered by the $K$-means method. In this method, the mean colors of the foreground and background clusters are denoted as $\{K_n^F\}$ and $\{K_n^B\}$, respectively.

The K-means method is initialized to have 64 clusters. Then, for each node $i$, the minimum distance is computed from the node's color $C(i)$ to foreground and background clusters. The minimum distance to foreground and background clusters can be computed using equation (2a) and (2b), respectively:

$$d_i^F = \min_n \left\| C(i) - K_n^F \right\| \qquad (2a)$$

$$d_i^B = \min_m \left\| C(i) - K_m^B \right\| \qquad (2b)$$

Therefore, $E_1(x_i)$ can be defined as follows:

$$E_1(x_i = 1) = 0 \qquad E_1(x_i = 0) = \infty \qquad \forall i \in F$$
$$E_1(x_i = 1) = \infty \qquad E_1(x_i = 0) = 0 \qquad \forall i \in B$$
$$E_1(x_i = 1) = \frac{d_i^F}{d_i^F + d_i^B} \qquad E_1(x_i = 0) = \frac{d_i^B}{d_i^F + d_i^B} \qquad \forall i \in U \qquad \Bigg\} (3)$$

In equation (3), $U = N \setminus \{F \cup B\}$ represents the uncertain region in Fig. 3. Equations (1) and (2) ensure that the nodes in set $F$ or set $B$ will have the labels consistent with user inputs. Equation (3) results in nodes having similar colors to the foreground set $F$ being assigned to the foreground; and nodes having similar colors to the background set $B$ being assigned to the background.

Energy value $E_2$ represents the energy due to the gradient along the boundary enclosing the foreground region. The energy value $E_2$ can be defined as a function of the color gradient between two nodes i and $j$:

$$E_2(x_i, x_j) = |x_i - x_j| \cdot g(C_{ij}) \qquad (4)$$

where $g(\xi) = \dfrac{1}{\xi + 1}$, and $C_{ij} = \|C(i) - C(j)\|^2$ is the $L2$-Norm of the red-green-blue (RGB) color difference of two pixels

i and j.

The value $|x_i - x_j|$ includes the gradient information only along the segmentation boundary between the foreground region and the background region. Thus, $E_2$ may be viewed as a penalty term when adjacent nodes are assigned with different labels (i.e., foreground and background). The greater the similarity between two adjacent nodes, the larger $E_2$ is, and thus the less likely nodes i and $j$ are located along the boundary between foreground and background.

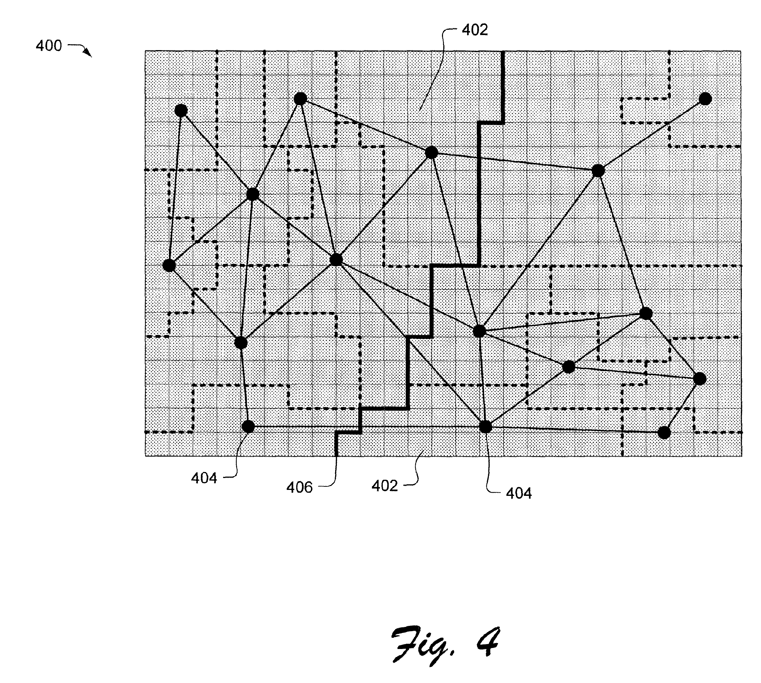

An Enhanced graph cut algorithm involves a pre-segmenting step in which pixels are grouped into regions prior to the segmenting process. In this implementation, a node is a group or region of pixels rather than an individual pixel. The watershed algorithm may be used to locate boundaries of the groups of pixels, while preserving small differences inside each group of pixels. Such an implementation is presented in Fig. 4. The enhanced graph cut algorithm requires fewer nodes to process, and can be finished more quickly than the per-pixel based approach described above. Therefore, the enhanced graph cut algorithm can provide instant feedback of the segmentation result.

Fig. 4 illustrates another graph 400 of pixels wherein pixels are in groups 402, indicated by dashed lines. How the pixels are grouped is determined during the pre-segmentation process. The graph 400 can be denoted by statement $G = \langle N, A \rangle$. In this case, the nodes $N$ are the set of all pixel groups 402, and the edges $A$ are the set of all arcs connecting adjacent pixel groups 402.

In this implementation, a set $F$ is again defined to include foreground seeds (not shown), but unlike the implementation of Fig. 3, the foreground seeds are groups 402 of pixels that have been marked. Similarly, a set $B$ of background seeds (not shown) contains a set of marked pixel groups 402. The uncertain region $U$ includes groups 402 that have not been marked.

Similarity among groups 402 can be determined using an energy function, such as equation (1) above. The likelihood energy $E_1$ is also similar to equation (3), but in this case the color $C(i)$ is computed as the mean color of a pixel group $i$. For ease of illustration, the mean color of each group 402 is represented by a filled circle 404.

To compute prior energy $E_2$ using equation (4), a first implementation defines $C_{ij}$ as the mean color difference between the two pixel groups $i$ and $j$. In another implementation, $Cij$ is similarly defined but it is further weighted by the shared boundary length between pixel groups $i$ and $j$.

Based on the energy minimization for the pixel groups 402, each group 402 is labeled as either a foreground group or a background group. A segmentation boundary 406 is rendered between adjacent foreground and background groups 402.

Studies have shown that the approximation using pre-segmentation (e.g., watershed segmentation) as in the implementation of Fig. 4 produces reasonable results and significantly improves the speed of segmentation over the single-pixel segmentation approach described in Fig. 3. In addition, prior to applying the watershed algorithm, the image may be down-sampled or filtered to reduce the number of nodes. For example, down-sampling can decrease the image size to a 1Kb x 1Kb dimension. As another example, the image may be filtered with a Gaussian filter.

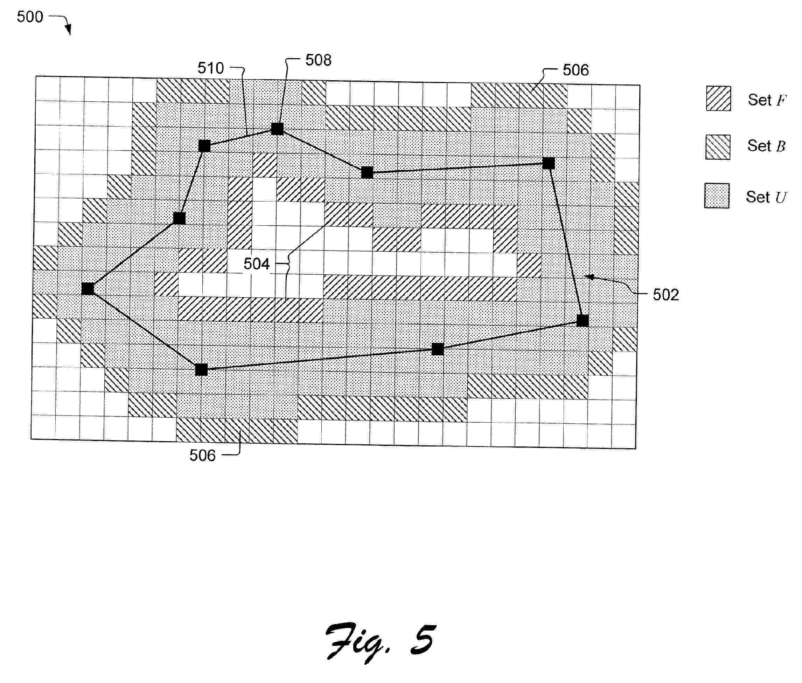

Using either the implementation shown in Fig. 3 or Fig. 4, after the segmentation boundary is determined, an editable polygon is automatically generated that bounds the foreground region. Fig. 5 illustrates an exemplary graph 500 including an editable polygon 502 between a set of foreground seeds 504 (labeled set *F*) and a set of background seeds 506 (labeled set *B*). The editable polygon 502 includes a number of vertices 508 connecting polygon lines 510.

Also shown in Fig. 5 is a set of pixels in an uncertain region. The uncertain pixel set is labeled set *U*. Set *U* is determined by dilating the polygon 502. Sets *F* and *B* are defmed as the inner and outer boundaries of set *U*, respectively.

The polygon 502 is constructed in an iterative way. An initial polygon is constructed that has only one vertex, which is the point with the highest curvature on the segmentation boundary. Stepping around the segmentation boundary, the distance from each point on the segmentation boundary to the polygon in the previous step is computed. The farthest point is inserted to generate a new polygon. The iteration stops when the largest distance is less than a predefined threshold (e.g., 3.2 pixels).

After the polygon 502 is constructed each of the vertices 508 can be adjusted by the user. For example, the user can "click and drag" a vertex 508 to move the vertex to another position. During polygon editing, once the user releases the mouse button, the system will execute the graph cut segmentation algorithm again to optimize the segmentation boundary. The optimized boundary automatically snaps around the foreground even though the polygon vertices 508 may not be on it.

During polygon editing, the polygon is not enforced as hard constraints. However, the segmentation algorithm optimizes $E(X)$ again to get an optimized boundary, while using the polygon location as a soft constraint. The likelihood energy $E_1$ is defined as in equation (3) above. However, when $E(X)$ is recomputed during polygon editing, the prior energy $E_2$ is defined differently, as shown in equation (5):

$$E_2(x_i, x_j) = |x_i - x_j| \cdot g\left((1-\beta) \cdot C_{ij} + \beta \cdot \eta \cdot g\left(D_{ij}^2\right)\right) \qquad (5)$$

As shown in equation (5), in addition to the gradient term ($C_{ij}$), $E_2$ is a function of polygon locations as soft constraints, in order to handle ambiguous and low contrast gradient boundaries. In equation (5), $g(\xi) = \dfrac{1}{\xi+1}$, $D_{ij}$ is the distance from the center of arc (*i, j*) to the polygon and $\eta$ is a scaling factor to unify the units of the two terms (a typical value is 10).

In Equation (5), $\beta \in [0,1]$ is used to control the influence of $D(i, j)$. A typical value of $\beta$ is 0.5, although $\beta$ may be adjusted to achieve better performance. Note that $\beta = 1$ makes the graph cut segmentation output the result that is snapped onto the polygon, regardless of the image gradient. When color gradient $C_{ij}$ is small, $g\left(D_{ij}^2\right)$ dominates $E_2$, which encourages the result to snap close to the polygon location. By using polygon soft constraints, the segmentation boundary more accurately snaps to low contrast edges. In addition, unlike traditional region-based tools, polygon soft constraints result in accurate segmentation even when foreground edges are ambiguous, low-contrast, or otherwise unclear.

Through the user interface described below, the user may specify manually that a polygon vertex be a "hard" constraint, so that the system ensures the graph cut segmentation result to pass through this vertex. For a specified hard constrained vertex, the uncertain region *U* is automatically split into two parts along its bisector. The two "split" lines are added into foreground seeds *F* 504 and background seeds *B* 506 respectively, so that graph cut segmentation outputs a result passing through this vertex, because it is the only connection between the foreground and background at the specified location.

## Exemplary User Interface

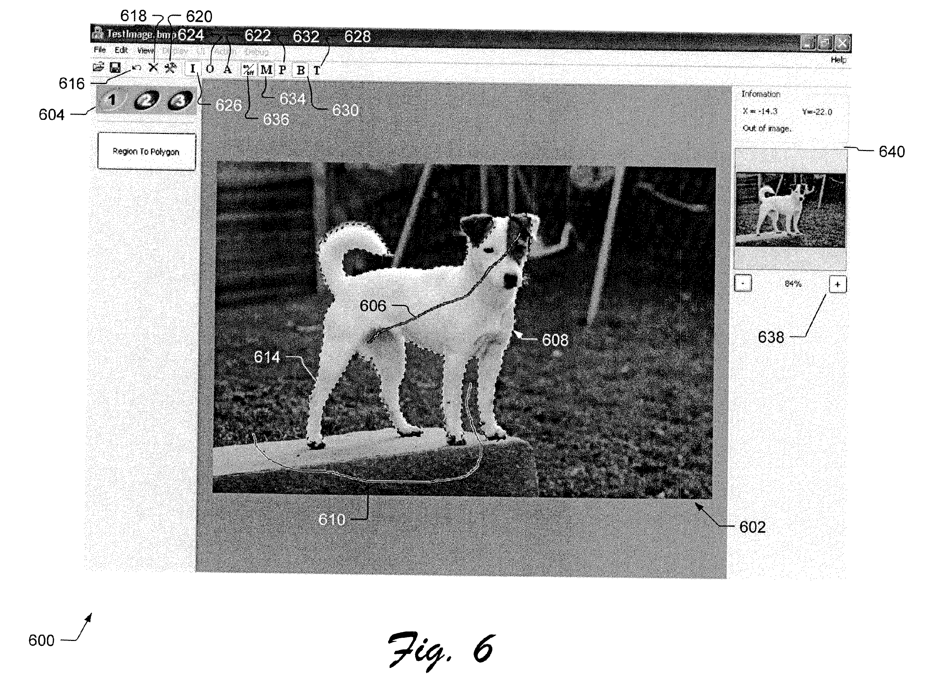

An exemplary user interface enables a user to step through each marking, polygon editing, and extraction steps described above. Figs. 6 - 8 illustrate screenshots of such an exemplary user interface at various steps in the process.

Fig. 6 illustrates a screenshot of the user interface 600 at the marking step. Initially an image 602 is loaded for processing. Prior to user interaction, a pre-processing algorithm can pre-segment the image 602 as discussed above with respect to pre-segmentation. However, pre-segmenting is an optional and not a required step.

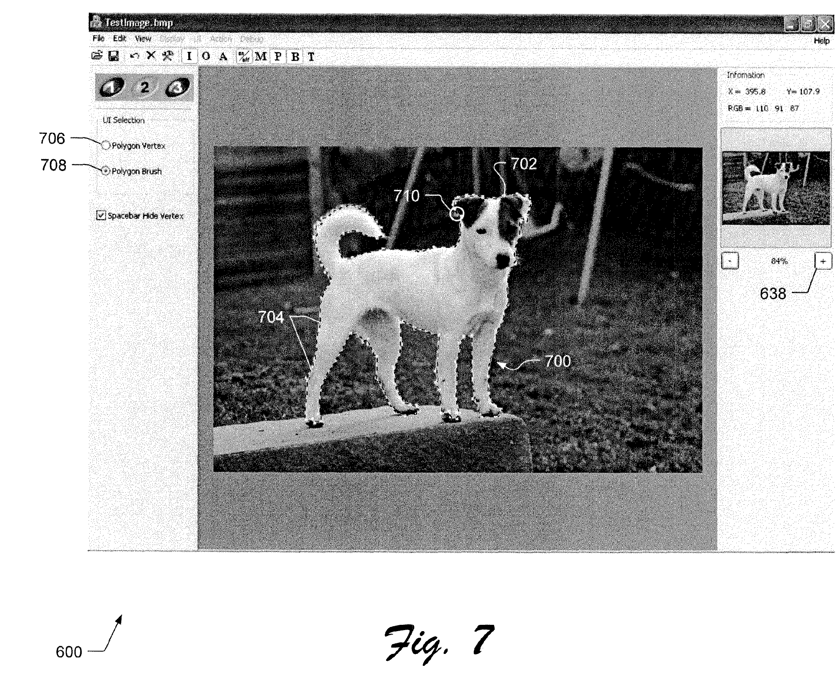

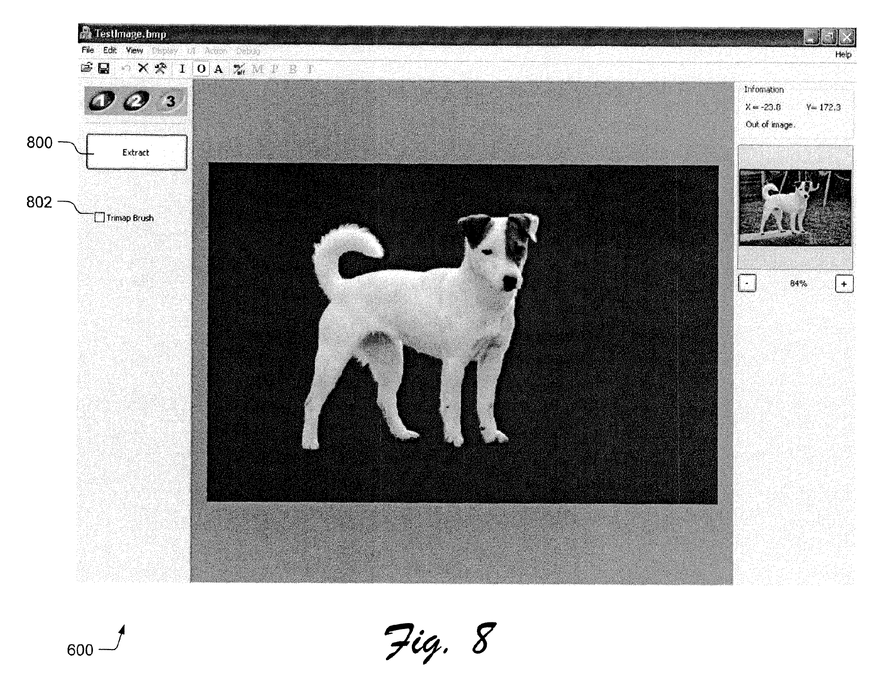

A selectable step selector 604 includes three numbers (e.g., 1, 2, 3) associated with the steps in the process. When the user selects one of the numbers in the step selector 604, the user interface 600 proceeds to a screen corresponding to the selected step. In this illustration, step 1 corresponds to the marking step, step 2 corresponds to the polygon editing step (illustrated in Fig. 7), and step 3 corresponds to the extracting step (illustrated in Fig. 8). Using the step selector 604, the user can move to any step from any other step.

At the marking step, the user creates one or more marks 606 on a foreground region 608 using a foreground marking mode. In one implementation, the user can clicks the left mouse button while dragging the mouse over the desired portion of the foreground region 608. In another implementation, the user creates the mark(s) 606 on a touch sensitive screen and/or with a pen-computing device, such as a stylus.

The foreground mark(s) 606 are presented in a foreground color (e.g., yellow). The foreground mark(s) 606 do not need to completely fill or completely enclose the foreground region 608. By making the foreground mark(s) 606, the user coarsely indicates which portions of the image are similar to the foreground region 608.

The user also creates one or more marks 610 on a background region 612 using a background marking mode. In one implementation, the user can clicks the right mouse button while dragging the mouse over the desired portion of the background region 612. In another implementation, the user creates the mark(s) 610 on a touch sensitive screen and/or with a pen-computing device, such as a stylus.

The background mark(s) 606 are presented in a background color (e.g., blue). The background mark(s) 606 do not need to completely fill the background region 612 or completely enclose the foreground region 608. In addition, the background mark(s) 606 can be relatively far from the boundary of the foreground region 608. The user simply coarsely indicates which portions of the image 602 are similar to the background region 612.

The graph cut algorithm is triggered when the user releases the mouse button after drawing the foreground mark(s) 606 or the background mark(s). The resulting segmentation boundary 614 is rendered around the foreground region 608. The user then inspects the segmentation boundary 614 on screen and decides if more marks need to drawn. The segmentation boundary 614 is generated virtually instantaneously so that the user can rapidly see the result and add marks, if necessary.

In addition to adding marks, the user may undo or redo any marks that have been made using an undo button 616 or a delete button 618. A tools button 620 enables the user to adjust configuration parameters. Exemplary configuration parameters are organized into three groups corresponding to the three steps, respectively. For the marking step, an exemplary configuration parameter is a speed factor. The speed factor controls the maximum image size that can be pre-segmented in the pre-segmentation step. If the input image is larger than the given size (e.g., speed factor times 100), the image is resized to fulfill the requirement.

For the polygon editing step, three exemplary parameters include max error, dilation scale, and erosion scale. The max error parameter controls the boundary to polygon conversion error. The dilation and erosion scale parameters control the width of the band for the graph cut segmentation algorithm.

For the extraction step, four exemplary parameters are variance, erode scale, dilate scale, and enable alpha prior. The variance parameter controls the sensitivity of the Bayesian Matting algorithm to noise. The erode and dilate scale parameters are used to control the band of pixels around the boundary for matting extraction. If enable alpha prior is enabled, variance alpha is used to control the influence of feathering alpha prior to the Bayesian matting algorithm.

An alpha channel button 622 (labeled "A") can be used to display the image as an alpha channel format, rather than RGB. An alpha channel multiplier button 624 (labeled "O") can be used to display the image with the foreground multiplied by the alpha channel. An image button 626 (labeled "I") displays the original color image without any alpha channel adjustment.

A trimap button 628 can be toggled to hide or show trimap indicators, discussed further below. A boundary button 630 can be toggled to hide or show the segmentation boundary 614. A polygon button 632 can be toggled to hide or show the editable polygon. A marker button 634 can be toggled to hide or show the foreground mark(s) 606 and the background mark(s) 610. An "on/off" button 636 is used to hide and show the trimap indicators, the segmentation boundary 614, the polygon, and the foreground and background markers.

Zoom controls 638 enable the user to zoom into or away from the image 602. An information window 640 indicates what area of the image 602 is shown, and enables the user to center the image at a selected position. The information window 640 also indicates the RGB values for a selected pixel in the image 602.

Although the marking step and the graph cut algorithm produces a highly accurate segmentation boundary 614 around the foreground region 608, the user may want to further refine the segmentation boundary 614. Therefore, the user can select step 2 in the step indicator 604 to proceed to the polygon editing step. When step 2 is selected, the segmentation boundary 614 is automatically converted into a polygon.

Fig. 7 illustrates a screenshot of the user interface 600 employed during the polygon editing step. The foreground region 608 is bounded by an editable polygon 700. The polygon 700 includes editable vertices 702 and polygon lines 704. The user may edit the vertices 702 in two ways: direct vertex editing and polygon brushing.

For direct vertex editing, the user selects a polygon vertex radio button 706. When the polygon vertex radio button 706 is selected, the user can select and move individual vertices (i.e., one vertex at a time) using the mouse or other input device. The user may also add or delete vertices 702. In addition, direct vertex editing enables the user to group multiple vertices together for processing. Because the vertices 702 may be rather small, it may be beneficial to zoom in close to a particular area using the zoom controls 638 during individual vertex editing.

For polygon brushing, the user selects a polygon brush radio button 708. When the user selects the polygon brush radio button 708, a brush tool 710 appears. The brush tool 710 enables the user to draw a single stroke to replace a segment of a polygon. The user brushes a stroke starting from the polygon (e.g., *A*) and stopping on another place on the polygon (not necessarily be vertex) (e.g., *B*) so that the polygon 700 is split into two parts, one of which has less angle difference to the user stroke. The part with the less angle difference is replaced by the user stroke to generate a new polygon. The angle of the user stroke and the two parts of the polygon is measured by the tangent direction at vertex *A* and from *A* to *B*.

Fig. 8 illustrates a screenshot of the user interface 600 employed during the foreground extraction step. The user can select an extract button 800 to cut the segmented foreground region 608 out of the image. By extracting the foreground region 608, the background region is removed. The extracted foreground region 608 can then be inserted in another image with a different background.

The user interface 600 of Fig. 8 also includes a trimap brush selector 802. When the user selects the trimap brush selector 802, a trimap (not shown) is presented with a trimap brush tool (not shown). The trimap indicates three regions of the image: definitely foreground, definitely background, and uncertain. The user can further refine the trimap to cover more uncertain regions around boundary, e.g. fury or hairy regions. By this mean, matting algorithm can extract the fractional transparency information inside uncertain region and the foreground color as well.

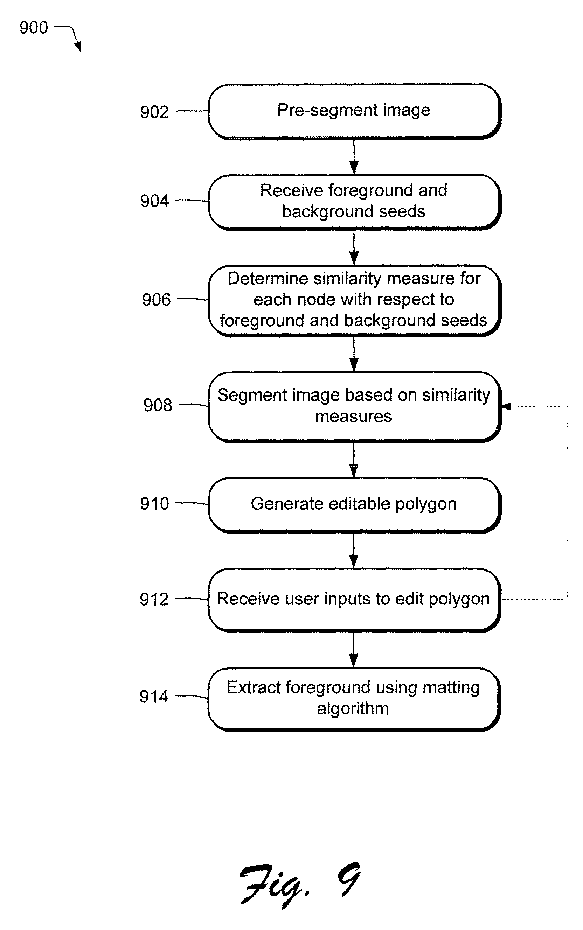

Fig. 9 illustrates an algorithm 900 having exemplary operations that may be carried out by a computer to perform image data separation in accordance with implementations described herein. An image is loaded into memory and presented to the user prior to executing the algorithm 900.

An optional pre-segmenting operation 902 pre-segments the image by grouping pixels into regions according to an algorithm, such as the watershed algorithm. The pre-segmenting operation 902 may also include filtering the image and/or down-sampling to speed the segmentation process.

A receiving operation 904 receives foreground and/or background seeds. In one implementation, the foreground seeds are specified by a user clicking the left mouse button and dragging the mouse over the foreground seed pixels, and the background seeds are specified by a user clicking the right mouse button and dragging the mouse over the background seed pixels. The foreground seeds are presented in a foreground color, while the background seeds are presented in another color.

A determining operation 906 determines a similarity measure for pixels in the image based on assignments of the pixels to either foreground or background. In one implementation, pixels are assigned to either the foreground or the background such that total energy in the image is minimized.

A segmenting operation 908 segments the image according to the pixel assignment in the determining operation 906. A segmentation boundary is automatically generated between pixels in the foreground region and pixels in the background region.

A generating operation 910 generates an editable polygon based on the segmentation boundary. The editable polygon is presented to the user. The user is able to move vertices of the polygon to further refine the boundary around the foreground region. The user may move vertices individually or multiple vertices at a time.

A receiving operation 912 receives the user inputs to edit the polygon and the algorithm 900 returns to the segmenting operation 906 to resegment the image based on the user edits. During second and subsequent iterations of the segmenting operation 906, the segmenting is performed using the vertices of the polygon as soft or hard constraints.

After the user has completed editing the polygon around the foreground region, an extracting operation 914 cuts the foreground region out of the image. One implementation of the extracting operation 914 employs coherent matting, which is an enhanced Bayesian matting algorithm with alpha prior, to compute the opacity around the segmentation boundary before compositing the foreground cutout on a new background. The uncertain region for matting is computed by dilating the segmentation boundary. Usually this dilation is of four pixels width on each side.

## Exemplary Computing Device

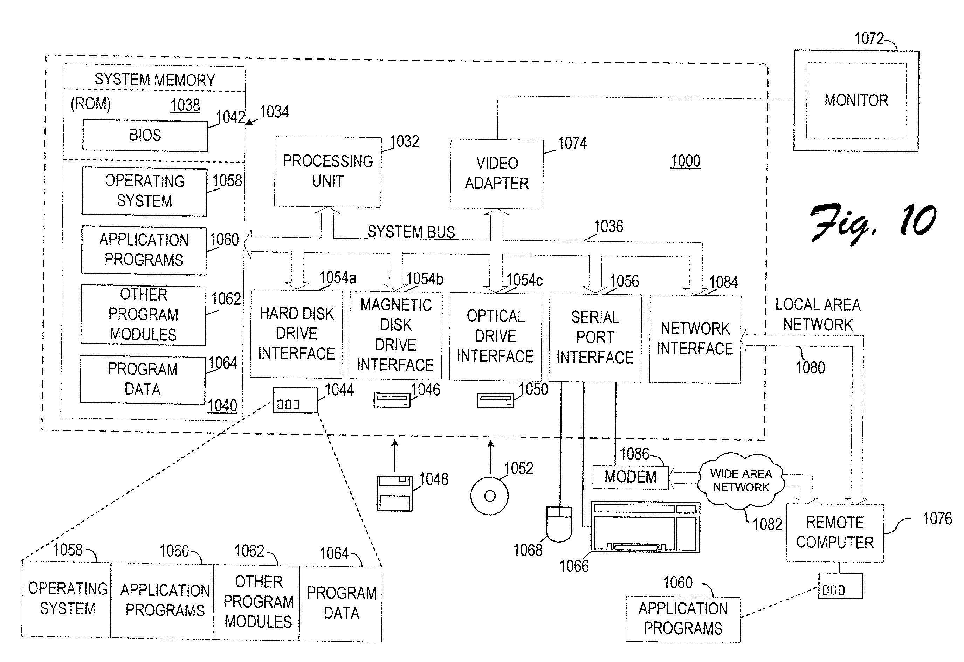

Fig. 10 is a schematic illustration of an exemplary computing device 1000 that can be used to implement the exemplary data separation methods and systems described herein. Computing device 1000 includes one or more processors or processing units 1032, a system memory 1034, and a bus 1036 that couples various system components including the system memory 1034 to processors 1032. The bus 1036 represents one or more of any of several types of bus structures, including a memory bus or memory controller, a peripheral bus, an accelerated graphics port, and a processor or local bus using any of a variety of bus architectures. The system memory 1034 includes read only memory (ROM) 1038 and random access memory (RAM) 1040. A basic input/output system (BIOS) 1042, containing the basic routines that help to transfer information between elements within computing device 1000, such as during start-up, is stored in ROM 1038.

Computing device 1000 further includes a hard disk drive 1044 for reading from and writing to a hard disk (not shown), and may include a magnetic disk drive 1046 for reading from and writing to a removable magnetic disk 1048, and an optical disk drive 1050 for reading from or writing to a removable optical disk 1052 such as a CD ROM or other optical media. The hard disk drive 1044, magnetic disk drive 1046, and optical disk drive 1050 are connected to the bus 1036 by appropriate interfaces 1054a, 1054b, and 1054c.

The drives and their associated computer-readable media provide nonvolatile storage of computer-readable instructions, data structures, program modules and other data for computing device 1000. Although the exemplary environment described herein employs a hard disk, a removable magnetic disk 1048 and a removable optical disk 1052, other types of computer-readable media such as magnetic cassettes, flash memory cards, digital video disks, random access memories (RAMs), read only memories (ROMs), and the like, may also be used in the exemplary operating environment.

A number of program modules may be stored on the hard disk 1044, magnetic disk 1048, optical disk 1052, ROM 1038, or RAM 1040, including an operating system 1058, one or more application programs 1060, other program modules 1062, and program data 1064. A user may enter commands and information into computing device 1000 through input devices such as a keyboard 1066 and a pointing device 1068. Other input devices (not shown) may include a microphone, joystick, game pad, satellite dish, scanner, or the like. These and other input devices are connected to the processing unit 1032 through an interface 1056 that is coupled to the bus 1036. A monitor 1072 or other type of display device is also connected to the bus 1036 via an interface, such as a video adapter 1074.

Generally, the data processors of computing device 1000 are programmed by means of instructions stored at different times in the various computer-readable storage media of the computer. Programs and operating systems may be distributed, for example, on floppy disks, CD-ROMs, or electronically, and are installed or loaded into the secondary memory of the computing device 1000. At execution, the programs are loaded at least partially into the computing device's 1000 primary electronic memory.

Computing device 1000 may operate in a networked environment using logical connections to one or more remote computers, such as a remote computer 1076. The remote computer 1076 may be a personal computer, a server, a router, a network PC, a peer device or other common network node, and typically includes many or all of the elements described above relative to computing device 1000. The logical connections depicted in Fig. 10 include a LAN 1080 and a WAN 1082. The logical connections may be wired, wireless, or any combination thereof.

The WAN 1082 can include a number of networks and subnetworks through which data can be routed from the computing device 1000 and the remote computer 1076, and vice versa. The WAN 1082 can include any number of nodes (e.g., DNS servers, routers, etc.) by which messages are directed to the proper destination node.

When used in a LAN networking environment, computing device 1000 is connected to the local network 1080 through a network interface or adapter 1084. When used in a WAN networking environment, computing device 1000 typically includes a modem 1086 or other means for establishing communications over the wide area network 1082, such as the Internet. The modem 1086, which may be internal or external, is connected to the bus 1036 via a serial port interface 1056.

In a networked environment, program modules depicted relative to the computing device 1000, or portions thereof, may be stored in the remote memory storage device. It will be appreciated that the network connections shown are exemplary and other means of establishing a communications link between the computers may be used.

The computing device 1000 may be implemented as a server computer that is dedicated to server applications or that also runs other applications. Alternatively, the computing device 1000 may be embodied in, by way of illustration, a stand-alone personal desktop or laptop computer (PCs), workstation, personal digital assistant (PDA), or electronic appliance, to name only a few.

Various modules and techniques may be described herein in the general context of computer-executable instructions, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

An implementation of these modules and techniques may be stored on or transmitted across some form of computer-readable media. Computer-readable media can be any available media that can be accessed by a computer. By way of example, and not limitation, computer-readable media may comprise "computer storage media" and "communications media."

"Computer storage media" includes volatile and non-volatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

"Communication media" typically embodies computer-readable instructions, data structures, program modules, or other data in a modulated data signal, such as carrier wave or other transport mechanism. Communication media also includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also included within the scope of computer-readable media.

In addition to the specific implementations explicitly set forth herein, other aspects and implementations will be apparent to those skilled in the art from consideration of the specification disclosed herein. It is intended that the specification and illustrated implementations be considered as examples only, with a true scope and spirit of the following claims.

**Claims**

1. A method for separating a data node from a collection of data nodes comprising:

   receiving a first set of one or more data nodes specified by a user using a first specification mode;
   receiving a second set of one or more data nodes specified by a user using a second specification made;
   automatically identifying a data node to be separated from the collection based on a similarity measure characterizing similarity between the data node to be separated and the one or more data nodes in the first set or similarity between the data node to be separated and the one or more data nodes in the second set.

2. A method as recited in claim 1 wherein the collection of nodes comprises a digital image.

3. A method as recited in claim 2 further comprising pre-segmenting the digital image into groups of pixels.

4. A method as recited in claim 2 further comprising automatically rendering a boundary around the data nodes to be separated.

5. A method as recited in claim 4 further comprising automatically rendering a polygon around the data nodes to be separated.

6. A method as recited in claim 5 wherein the polygon is editable.

7. A method as recited in claim 5 wherein individual vertices of the polygon are editable.

8. A method as recited in claim 5 wherein the polygon is editable using a brush tool.

9. A method as recited in claim 2 wherein the one or more nodes in the first set comprise foreground seeds.

10. A method as recited in claim 2 wherein the one or more nodes in the second set comprise background seeds.

11. A method as recited in claim 2 wherein the automatically identifying operation comprises minimizing an energy function characterizing energy in the digital image.

12. A method as recited in claim 2 wherein the automatically identifying operation comprises performing a graph cut algorithm.

13. A method as recited in claim 3 wherein the pre-segmenting comprises performing a watershed algorithm to group pixels in the digital image.

14. A method as recited in claim 5 further comprising rendering a trimap around the data nodes to be separated.

15. A computer-readable medium having stored thereon computer-executable instructions causing a computer to execute a process for separating a foreground region from a digital image, the process comprising:

    segmenting one or more pixels from the digital image based on a similarity measure characterizing similarity between the one or more pixels and a set of one or more foreground seeds and a set of one or more background seeds.

**16.** A computer-readable medium as recited in claim 15, the process further comprising:

detecting marking of the one or more foreground seeds via a foreground marking mode;
detecting marking of the one or more background seeds via a background marking mode.

**17.** A computer-readable medium as recited in claim 16 wherein the foreground marking mode comprises activating a first control on an input device while the one or more foreground seeds are selected and the background marking mode comprises activating a second control on the input device while the one or more background seeds are selected.

**18.** A computer-readable medium as recited in claim 15, the process further comprising automatically bounding the selected one or more pixels.

**19.** A computer-readable medium as recited in claim 15, the process further comprising pre-segmenting the digital image into groups of pixels.

**20.** A computer-readable medium as recited in claim 18, the process further comprising generating an editable polygon around the one or more selected pixels.

**21.** A computer-readable medium as recited in claim 20, wherein the polygon is defined using one or more soft constraints.

**22.** A computer-readable medium as recited in claim 20, wherein the polygon is defined using one or more hard constraints.

**23.** A computer-readable medium as recited in claim 18 wherein at least one vertex of the editable polygon is user-adjustable.

**24.** A computer-readable medium as recited in claim 18 wherein the editable polygon is editable using a polygon brush tool.

**25.** A computer-readable medium as recited in claim 15, the process further comprising extracting the one or more pixels from the digital image.

**26.** A computer-readable medium as recited in claim 18, the process further comprising generating a trimap.

**27.** A computer-readable medium as recited in claim 19 wherein pre-segmenting comprises performing a watershed algorithm.

**28.** A computer-readable medium as recited in claim 27 wherein pre-segmenting further comprises filtering the digital image.

**29.** A computer-readable medium as recited in claim 20, the process further comprising:

detecting user adjustment of a vertex of the editable polygon;
in response to the detecting, performing the segmenting again.

**30.** A user interface for separating regions in a digital image, the user interface comprising:

a marking window enabling a user to mark a portion of a foreground region using a foreground marking mode and a portion of a background region using a background marking mode and automatically rendering a boundary around the foreground region;
a polygon editing window rendering an editable polygon around the foreground region.

**31.** A user interface as recited in claim 30 further comprising an extracting window enabling the user to extract the foreground region from the digital image.

**32.** A user interface as recited in claim 31 further comprising a step selector enabling the user to select the marking window, the polygon editing window or the extracting window from any of the other windows.

**33.** A user interface as recited in claim 30 further comprising a mark hide control enabling the user to show or hide foreground and background marks.

**34.** A user interface as recited in claim 30 further comprising a polygon hide control enabling the user to show or hide the editable polygon.

**35.** A user interface as recited in claim 30 wherein the polygon editing window comprises a polygon brush tool enabling a user to draw a single stroke to replace a segment of the editable polygon.

**36.** A system comprising:

an image processing module automatically segmenting a determined region from an image based on a similarity measure characterizing similarity between pixels in the determined region and a set of one or more specified seed pixels associated with pixels to be included in the determined region.

**37.** A system as recited in claim 36 wherein the image processing module labels each pixel in the image as being in the determined region or not being in the determined region such that energy in the image is minimized.

**38.** A system as recited in claim 36 wherein the image processing module automatically generates an editable polygon around the determined region.

**39.** A system as recited in claim 38 wherein the editable polygon is editable using at least one of a direct vertex editing mode and a polygon brush mode.

**40.** A system as recited in claim 36 wherein the image processing module pre-segments the image using a watershed algorithm.

**41.** A system as recited in claim 36 wherein the image processing module further segments the determined region based on another set of one or more specified seed pixels associated with pixels not to be included in the determined region.

**42.** A system comprising:

a memory having stored thereon a digital image having a foreground region and a background region;
means for separating the foreground region from the background region based on a similarity measure characterizing similarity between each pixel in the digital image and the foreground seeds specifying the foreground region and background seeds specifying the background region.

**43.** A system as recited in claim 42 wherein the means for separating comprises a rendering module operable to render a polygon around the foreground region, wherein the polygon is defined with one or more soft constraints.

**44.** A system as recited in claim 42 wherein the means for separating comprises a rendering module operable to render a polygon around the foreground region, wherein the polygon is defined with one or more hard constraints.

Polygon Conversion
and — 106
Boundary Editing

114

116

104 — Mark

112

110

108 — Extract

102

100

Fig. 1

Polygon Conversion and Boundary Editing

Fig. 2

*Fig. 3*

Fig. 4

Set F

Set B

Set U

502

506

508

504

510

506

500

Fig. 5

*Fig. 6*

EP 1 624 413 A2

Fig. 7

EP 1 624 413 A2

*Fig. 8*

EP 1 624 413 A2

900

902 — Pre-segment image

904 — Receive foreground and background seeds

906 — Determine similarity measure for each node with respect to foreground and background seeds

908 — Segment image based on similarity measures

910 — Generate editable polygon

912 — Receive user inputs to edit polygon

914 — Extract foreground using matting algorithm

*Fig. 9*

*Fig. 10*

EP 1 624 413 A2